# EUROPÄISCHE PATENTSCHRIFT

(11) **EP 2 373 908 B1**
(45) Veröffentlichungstag und Bekanntmachung des Hinweises auf die Patenterteilung: **19.11.2014**
(21) Anmeldenummer: 09764783.8
(22) Anmeldetag: 30.11.2009
(51) Int. Cl.: F16F 15/26

(54) **AUSGLEICHSWELLE**
BALANCING SHAFT
ARBRE D'EQUILIBRAGE

(30) Priorität: 02.12.2008 DE 102008060084
(43) Veröffentlichungstag der Anmeldung: 12.10.2011
(73) Patentinhaber: Schaeffler Technologies GmbH & Co. KG, 91074 Herzogenaurach (DE)
(72) Erfinder: SOLFRANK, Peter, 96158 Frensdorf (DE)
(86) Internationale Anmeldenummer: PCT/EP2009/066061
(87) Internationale Veröffentlichungsnummer: WO 2010/063677

(56) Entgegenhaltungen:
- WO-A-01/29447
- DE-A1- 10 349 201
- DE-A1-102006 051 996

## Beschreibung

### Gebiet der Erfindung

Die Erfindung betrifft eine Ausgleichswelle zum Ausgleich von Massenkräften und/oder Massenmomenten einer Brennkraftmaschine. Die Ausgleichswelle umfasst zumindest einen Unwuchtabschnitt mit exzentrisch zur Wellenachse verlaufendem Massenschwerpunkt und zumindest einen Lagerzapfen zur radialen Lagerung der Ausgleichswelle in der Brennkraftmaschine. Dabei sind der Unwuchtabschnitt und der Lagerzapfen aus unterschiedlichen Werkstoffen separat voneinander hergestellt und mittels einer drehstarren Stift/Bohrung-Verbindung axial aneinander anschließend gefügt.

### Hintergrund der Erfindung

Eine derartige Ausgleichswelle, bei welcher der Unwuchtabschnitt und der oder die Lagerzapfen aus zweckentsprechenden unterschtedlichen Werkstoffen bestehen, geht aus der DE 44 12 476 A1, DE 103 49 201 A1 und der DE 299 03 372 U1 hervor. In beiden Druckschriften ist es vorgeschlagen, die Lagerzapfen in wellenachsgleich fluchtende Bohrungen an den Längsenden des Unwuchtabschnitts fest einzufügen und dementsprechend eine kraftschlüssige Verbindung zwischen diesen Komponenten herzustellen. Die erforderliche Dauerfestigkeit dieser Stift/Bohrung-Verbindung bedingt jedoch insbesondere im Hinblick auf die teilweise nicht unerheblichen Drehschwingungen im Ausgleichswellenantrieb und die rotatorische Massenträgheit der Ausgleichswelle eine besonders hohe und mithin kostenintensive Oberflächen- und Maßgenauigkeit der Komponenten, um deren Relativverdrehungen dauerhaft ausschließen zu können.

### Aufgabe der Erfindung

Der vorliegenden Erfindung liegt daher die Aufgabe zugrunde, eine gefügte Ausgleichswelle der eingangs genannten Art so fortzubilden, dass deren Komponenten mittels einer verbesserten Stift/Bohrung-Verbindung dauerfest gegeneinander verdrehgesichert sind.

### Zusammenfassung der Erfindung

Die Lösung dieser Aufgabe ergibt sich aus den kennzeichnenden Merkmalen des Anspruchs 1, während vorteilhafte Weiterbildungen und Ausgestaltungen der Erfindung den Unteransprüchen entnehmbar sind. Demnach soll die Stift/Bohrung-Verbindung in Drehrichtung der Ausgleichswelle formschlüssig wirkend ausgebildet sein und zumindest zwei Stifte und zugehörige Bohrungen aufweisen, die exzentrisch zur Wellenachse verlaufen. Mit anderen Worten ist es vorgesehen, die Drehverbindung zwischen dem oder den Unwuchtabschnitten und dem oder den Lagerzapfen nicht - wie im Stand der Technik vorgesehen - kraftschlüssig, sondern mittels der exzentrisch zur Wellenachse angeordneten Stifte und zugehörigen Bohrungen formschlüssig wirkend auszubilden. Ein über die hierdurch erzielte Dauerfestigkeit einer solchen Drehverbindung hinausgehender Vorteil besteht im konstruktiven Gestaltungsspielraum hinsichtlich der Exzentrizität der Stifte und zugehörigen Bohrungen sowie deren Anzahl. So können beispielsweise bei hoher Exzentrizität mit entsprechend großem Hebelarm kleiner dimensionierte Stifte und Bohrungen vorgesehen sein.

In bevorzugter Weiterbildung der Erfindung soll es sich bei dem Werkstoff des Lagerzapfens um einen Wälzlagerstahl handeln, wobei der Lagerzapfen als Innenlaufbahn für die Wälzkörper eines Wälzlagers dient. Als Wälzlagerstahl kommen insbesondere die Sorten C16, 16MnCr5, C45, Cf53, C80 und 100Cr6 in Betracht.

Bekanntlich bieten wälzgelagerte Ausgleichswellen gegenüber konventionell gleitgelagerten Wellen das Potenzial einer deutlich reduzierten Lagerreibung. Dieses Potenzial kann vorliegend besonders kostengünstig ausgeschöpft werden, indem lediglich der oder die Lagerzapfen aus dem Wälzlagerstahl bestehen, während der oder die Unwuchtabschnitte aus deutlich kostengünstigerem Gusswerkstoff hergestellt sind.

Im Falle der Wälzlagerung kann es zugunsten einer erheblichen Massenreduzierung der Ausgleichswelle vorgesehen sein, dass der Lagerzapfen eine über dessen Umfang veränderliche Breite in Richtung der Wellenachse aufweist. Im einzelnen soll der Lagerzapfen in einer Lastzone, in welcher der Lagerzapfen von der mit der Ausgleichswelle umlaufenden Radiallast des Unwuchtabschnitts beaufschlagt ist, eine erste Breite aufweisen und außerhalb der Lastzone entweder eine zweite Breite aufweisend deutlich verjüngt oder am Umfang unterbrochen sein, wobei die Stifte und die zugehörigen Bohrungen zur Lastzone hin exzentriert sind. Ein so gestalteter Lagerzapfen ist zwar als Mittel zur Massenreduzierung der Ausgleichswelle grundsätzlich bekannt - diesbezüglich sei auf die EP 1 775 484 A2 mit verjüngten Lagerzapfen bzw. auf die WO 2007/121861 A1 mit unterbrochenen Lagerzapfen verwiesen - kann erfindungsgemäß jedoch besonders vorteilhaft mit dem oder den Unwuchtabschnitten gefügt werden, da die zur Lastzone, d.h. zur größeren Breite des Lagerzapfens hin exzentrierten Stifte und zugehörigen Bohrungen trotz abnehmender Breite des Lagerzapfens mit entsprechend großer Traglänge ausführbar sind. Die größtmögliche Traglänge ergibt sich in dem Fall, wenn die Stifte und die zugehörigen Bohrungen vollständig innerhalb der ersten Breite des Lagerzapfens verlaufen.

Außerdem können zwei identisch ausgebildete Lagerzapfen vorgesehen sein, die mit beiden Längsenden des Unwuchtabschnitts gefügt sind, wobei der mit einem antriebsseitigen Längsende des Unwuchtabschnitts gefügte Lagerzapfen und ein separat davon hergestelltes Antriebselement der Ausgleichswelle mittels einer weiteren drehstarren Stift/Bohrung-Verbindung axial aneinander anschließend gefügt sind und wobei die weitere Stift/Bohrung-Verbindung ebenfalls in Drehrichtung der Ausgleichswelle formschlüssig wirkend ausgebildet ist und zumindest zwei Stifte und zugehörige Bohrungen aufweist, die exzentrisch zur Wellenachse verlaufen.

Ein wesentlicher Vorteil dieser Ausgestaltung sind die nach dem Gleichteileprinzip kostengünstig herstellbaren Lagerzapfen. In diesem Sinne kann es dabei weiterhin vorgesehen sein, dass sämtliche Stift/Bohrung-Verbindungen jeweils genau zwei identisch ausgebildete Stifte und zugehörige Bohrungen aufweisen, die zu einer von der Wellenachse und dem Massenschwerpunkt des Unwuchtabschnitts aufgespannten Längssymmetrieebene der Ausgleichswelle im wesentlichen spiegelsymmetrisch verlaufen.

Sofern möglich und zweckmäßig, sollen die vorgenannten Merkmale und Ausgestaltungen der Erfindung auch beliebig miteinander kombinierbar sein.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung dargestellt ist. Es zeigen:
- Figur 1: eine erfindungsgemäße Ausgleichswelle in perspektivischer Ansicht und
- Figur 2: die Ausgleichswelle gemäß Figur 1 in explodierter Darstellung.

### Detaillierte Beschreibung der Zeichnungen

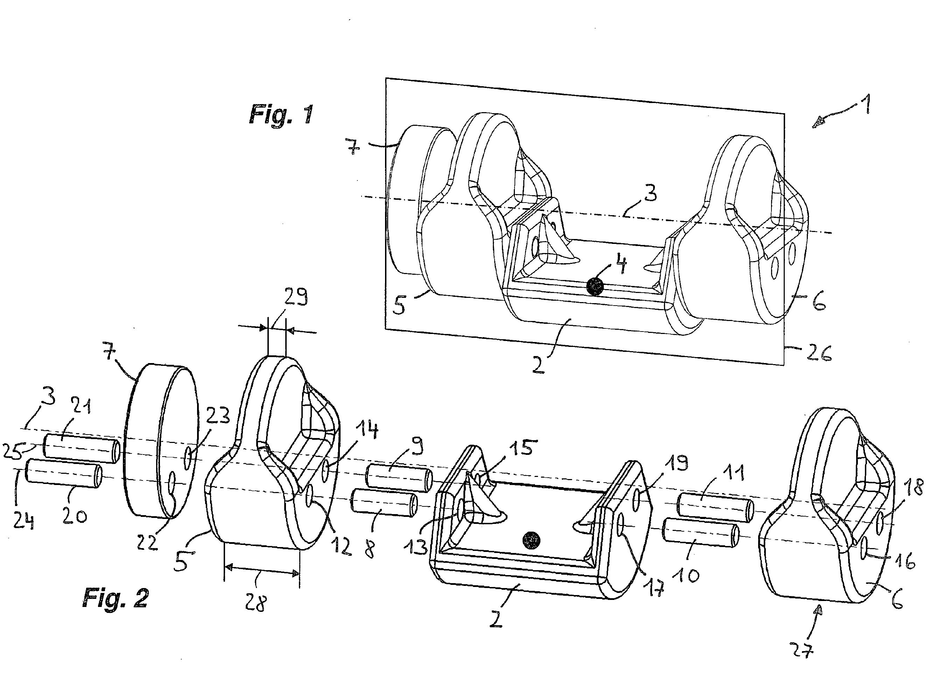

In den Figuren 1 und 2 ist eine Ausgleichswelle 1 zum Ausgleich von Massenkräften und oder Massenmomenten einer Brennkraftmaschine im Zusammenbau bzw. in explodierter Darstellung offenbart. Die Ausgleichswelle 1 ist aus separat voneinander hergestellten Komponenten gefügt und setzt sich aus einem Unwuchtabschnitt 2 mit exzentrisch zur Wellenachse 3 verlaufendem Massenschwerpunkt 4 und zwei Lagerzapfen 5 und 6, die mit beiden Längsenden des Unwuchtabschnitts 2 verbunden sind, sowie aus einem Antriebselement 7, das mit dem Lagerzapfen 5 am antriebsseitigen Längsende des Unwuchtabschnitts 2 verbunden ist, zusammen. Das Antriebselement 7 dient zur Aufnahme eines nicht dargestellten Ketten- oder Zahnrads zur Drehkopplung der Ausgleichswelle 1 mit der Kurbelwelle der Brennkraftmaschine.

Die beiden identisch ausgebildeten Lagerzapfen 5, 6 und der Unwuchtabschnitt 2 sind mittels drehstarrer Stift/Bohrung-Verbindungen stirnseitig axial aneinander anschließend gefügt, wobei die Stift/Bohrung-Verbindungen in Drehrichtung der Ausgleichswelle 1 formschlüssig wirkend ausgebildet sind. Sie weisen zu diesem Zweck jeweils zwei zylindrische Stifte 8, 9 und 10, 11 und zugehörige Bohrungen 12, 13, 14, 15 bzw. 16, 17, 18, 19 auf, die exzentrisch zur Wellenachse 3 verlaufen. Jeder der Stifte 8 bis 11 ist in den zugehörigen Bohrungen 12 bis 19 in den Lagerzapfen 5, 6 und im Unwuchtabschnitt 2 eingepresst, um die genannten Komponenten axial aneinander zu befestigen. Zum Fügen des Antriebselements 7 mit dem antriebsseitigen Lagerzapfen 5 ist eine hierzu identische weitere Stift/Bohrung-Verbindung mit Stiften 20, 21 und den zugehörigen Bohrungen 12, 14, 22 und 23 vorgesehen. Die Stifte 8, 10, 20 mit den zugehörigen Bohrungen 12, 13, 16, 17, 22 und die Stifte 9, 11, 21 mit den zugehörigen Bohrungen 14, 15, 18, 19, 23 verlaufen jeweils auf gemeinsamen Achsen 24 bzw. 25, die zu einer von der Wellenachse 3 und dem Massenschwerpunkt 4 des Unwuchtabschnitts 2 aufgespannten Längssymmetrieebene 26 der Ausgleichswelle 1 spiegelsymmetrisch verlaufen (siehe Figur 1).

Die Stifte 8, 9 und 10, 11 sowie 20, 21 sind jeweils miteinander identisch, wobei als alternative Ausgestaltung auch die Möglichkeit besteht, die aufeinander folgenden Stifte 8 und 20 sowie 9 und 21 durch zwei entsprechend verlängerte Stifte zu ersetzen.

Während es sich bei dem Unwuchtabschnitt 2 um ein kostengünstig herstellbares Stahlgussteil handelt, sind die Lagerzapfen 5, 6 als Schmiedeteile aus einem Wälzlagerstahl der eingangs genannten Sorten hergestellt und bilden jeweils eine verschleißfeste Innenlaufbahn für die Wälzkörper eines nicht dargestellten Wälzlagers, mittels welchem die Ausgleichswelle 1 radial in der Brennkraftmaschine gelagert ist.

Aufgrund der mit der Ausgleichswelle 1 umlaufenden Radiallast des Unwuchtabschnitts 2 bildet sich auf den Lagerzapfen 5, 6 jeweils eine darauf stillstehende Lastzone aus, deren Belastung von einem mit 27 bezeichneten Umfangsabschnitt der Lagerzapfen 5, 6 (in der hier vorliegenden Darstellung: deren Unterseite) ausgehend abnimmt. In Verbindung mit der genannten Wälzlagerung der Ausgleichswelle 1 bietet dies die Möglichkeit, die Lagerzapfen 5, 6 mit einer über deren Umfang veränderlichen Breite in Richtung der Wellenachse 3 zu versehen. Im dargestellten Ausführungsbeispiel besitzen die Lagerzapfen 5, 6 eine erste Breite 28, die sich symmetrisch zur Lastzone über einen Umfang von etwa 200° erstreckt und außerhalb dieses Bereichs unter deutlicher Verjüngung in eine zweite Breite 29 übergeht.

Als hierzu alternative Ausgestaltung besteht auch die Möglichkeit, die Lagerzapfen 5, 6 jeweils an dem der Lastzone, d.h. dem Umfangsabschnitt 27 gegenüberliegenden und nicht oder allenfalls nur gering belasteten Umfangsbereich zu unterbrechen, so dass sich dann die Innenlaufbahn für die Wälzkörper nicht über einen vollständigen Winkel von 360° erstrecken würde.

Um die wirksame Traglänge der Stift/Bohrung-Verbindungen zu maximieren, sind die Achsen 24, 25 zum Massenschwerpunkt 4, d.h. zur Lastzone hin exzentriert, wobei die Stifte 8 bis 11 und 20, 21 sowie die zugehörigen Bohrungen 12 bis 19 vollständig innerhalb der ersten Breite 28 der Lagerzapfen 5, 6 verlaufen.

Der Durchmesser der Lagerzapfen 5, 6 und der Hüllkreis des Unwuchtabschnitts 2 sind so dimensioniert, dass der äußere Hüllkreis der Wälzkörper kleiner als der Hüllkreis des Unwuchtabschnitts 2 ist. Im Falle einer axialen Montage der Ausgleichswelle 1 in die Brennkraftmaschine kann es dann zweckmäßig sein, die Ausgleichswelle 1 mit auf den Lagerzapfen 5, 6 montierten Wälzkörpersätzen (z.B. Nadeln und Nadelkäfig) und mit Außenringen, deren Durchmesser größer als der Hüllkreis des Unwuchtabschnitts 2 ist, zu bestücken.

### Bezugszahlen

- 1: Ausgleichswelle
- 2: Unwuchtabschnitt
- 3: Wellenachse
- 4: Massenschwerpunkt
- 5: Lagerzapfen
- 6: Lagerzapfen
- 7: Antriebselement
- 8: Stift
- 9: Stift
- 10: Stift
- 11: Stift
- 12: Bohrung
- 13: Bohrung
- 14: Bohrung
- 15: Bohrung
- 16: Bohrung
- 17: Bohrung
- 18: Bohrung
- 19: Bohrung
- 20: Stift
- 21: Stift
- 22: Bohrung
- 23: Bohrung
- 24: Achse
- 25: Achse
- 26: Längssymmetrieebene der Ausgleichswelle
- 27: Umfangsabschnitt des Lagerzapfens
- 28: erste Breite
- 29: zweite Breite

## Patentansprüche

1. Ausgleichswelle (1) zum Ausgleich von Massenkräften und/oder Massenmomenten einer Brennkraftmaschine, umfassend zumindest einen Unwuchtabschnitt (2) mit exzentrisch zur Wellenachse (3) verlaufendem Massenschwerpunkt (4) und zumindest einen Lagerzapfen (5, 6) zur radialen Lagerung der Ausgleichswelle (1) in der Brennkraftmaschine, wobei der Unwuchtabschnitt (2) und der Lagerzapfen (5, 6) aus unterschiedlichen Werkstoffen separat voneinander hergestellt und mittels einer drehstarren Stift/Bohrung-Verbindung axial aneinander anschließend gefügt sind, **dadurch gekennzeichnet, dass** die Stift/Bohrung-Verbindung in Drehrichtung der Ausgleichswelle (1) formschlüssig wirkend ausgebildet ist und zumindest zwei Stifte (8, 9, 10, 11) und zugehörige Bohrungen (12, 13, 14, 15, 16, 17, 18, 19) aufweist, die exzentrisch zur Wellenachse (3) verlaufen.

2. Ausgleichswelle (1) nach Anspruch 1, **dadurch gekennzeichnet, dass** es sich bei dem Werkstoff des Lagerzapfens (5, 6) um einen Wälzlagerstahl handelt, wobei der Lagerzapfen (5, 6) als Innenlaufbahn für die Wälzkörper eines Wälzlagers dient.

3. Ausgleichswelle (1) nach Anspruch 2, **dadurch gekennzeichnet, dass** der Lagerzapfen (5, 6) eine über dessen Umfang veränderliche Breite in Richtung der Wellenachse (3) aufweist dergestalt, dass der Lagerzapfen (5, 6) in einer Lastzone, in welcher der Lagerzapfen (5, 6) von der mit der Ausgleichswelle (1) umlaufenden Radiallast des Unwuchtabschnitts (2) beaufschlagt ist, eine erste Breite (28) aufweist und außerhalb der Lastzone entweder eine zweite Breite (29) aufweisend deutlich verjüngt oder am Umfang unterbrochen ist, wobei die Stifte (8, 9, 10, 11) und die zugehörigen Bohrungen (12, 13, 14, 15, 16, 17, 18, 19) zur Lastzone hin exzentriert sind.

4. Ausgleichswelle (1) nach Anspruch 3, **dadurch gekennzeichnet, dass** die Stifte (8, 9, 10, 11) und die zugehörigen Bohrungen (12, 13, 14, 15, 16, 17, 18, 19) vollständig innerhalb der ersten Breite (28) des Lagerzapfens (5, 6) verlaufen.

5. Ausgleichswelle (1) nach Anspruch 1, **dadurch gekennzeichnet, dass** zwei identisch ausgebildete Lagerzapfen (5, 6) vorgesehen sind, die mit beiden Längsenden des Unwuchtabschnitts (2) gefügt sind, wobei der mit einem antriebsseitigen Längsende des Unwuchtabschnitts (2) gefügte Lagerzapfen (5) und ein separat davon hergestelltes Antriebselement (7) der Ausgleichswelle (1) mittels einer weiteren drehstarren Stift/Bohrung-Verbindung axial aneinander anschließend gefügt sind und wobei die weitere Stift/Bohrung-Verbindung ebenfalls in Drehrichtung der Ausgleichswelle (1) formschlüssig wirkend ausgebildet ist und zumindest zwei Stifte (20, 21) und zugehörige Bohrungen (12, 14, 22, 23) aufweist, die exzentrisch zur Wellenachse (3) verlaufen.

6. Ausgleichswelle (1) nach Anspruch 5, **dadurch gekennzeichnet, dass** die Stift/Bohrung-Verbindungen und die weitere Stift/Bohrung-Verbindung jeweils genau zwei identisch ausgebildete Stifte (8 und 9, 10 und 11, 20 und 21) und zugehörige Bohrungen (12, 13, 14, 15, 16, 17, 18, 19, 22, 23) aufweisen, die zu einer von der Wellenachse (3) und dem Massenschwerpunkt (4) des Unwuchtabschnitts (2) aufgespannten Längssymmetrieebene (26) der Ausgleichswelle (1) im wesentlichen spiegelsymmetrisch verlaufen.

## Claims

1. Balancing shaft (1) for the balancing of mass forces and/or moments of inertia of an internal combustion engine, comprising at least one unbalance portion (2) with a mass centre of gravity (4) running eccentrically to the shaft axis (3) and at least one bearing journal (5, 6) for the radial mounting of the balancing shaft (1) in the internal combustion engine, the unbalance portion (2) and the bearing journal (5, 6) being produced separately from one another from different materials and subsequently being joined axially to one another by means of a rotationally rigid pin/bore connection, chazactezized in that the pin/bore connection is designed to act positively in the direction of rotation of the balancing shaft (1) and has at least two pins (8, 9, 10, 11) and associated bores (12, 13, 14, 15, 16, 17, 18, 19) which run eccentrically to the shaft axis (3).

2. Balancing shaft (1) according to Claim 1, **characterized in that** the material of the bearing journal (5, 6) is a rolling bearing steel, the bearing journal (5, 6) serving as an inner raceway for the rolling bodies of a rolling bearing.

3. Balancing shaft (1) according to Claim 2, **characterized in that** the bearing journal (5, 6) has a width, variable over its circumference, in the direction of the shaft axis (3), in such a way that the bearing journal (5, 6) has a first width (28) in a load zone, in which the bearing journal (5, 6) is acted upon by the radial load, rotating with the balancing shaft (1), of the unbalance portion (2), and, outside the load zone, either is markedly tapered so as to have a second width (29) or is interrupted on the circumference, the pins (8, 9, 10, 11) and the associated bores (12, 13, 14, 15, 16, 17, 18, 19) being eccentric with respect to the load zone.

4. Balancing shaft (1) according to Claim 3, **charactezized** in that the pins (8, 9, 10, 11) and the associated bores (12, 13, 14, 15, 16, 17, 18, 19) run completely within the first width (28) of the bearing journal (5, 6).

5. Balancing shaft (1) according to Claim 1, **characterized in that** two identically formed bearing journals (5, 6) are provided, which are joined to the two longitudinal ends of the unbalance portion (2), the bearing journal (5) joined to a drive-side longitudinal end of the unbalance portion (2) and a drive element (7), produced separately therefrom, of the balancing shaft (1) subsequently being joined axially to one another by means of a further rotationally rigid pin/bore connection, and the further pin/bore connection likewise being designed to act positively in the direction of rotation of the balancing shaft (1) and having at least two pins (20, 21) and associated bores (12, 14, 22, 23) which run eccentrically to the shaft axis (3).

6. Balancing shaft (1) according to Claim 5, **characterized in that** the pin/bore connections and the further pin/bore connection have in each case exactly two identically formed pins (8 and 9, 10 and 11, 20 and 21) and associated bores (12, 13, 14, 15, 16, 17, 18, 19, 22, 23) which run essentially mirror-symmetrically to a longitudinal plane of symmetry (26) of the balancing shaft (1), the said longitudinal plane of symmetry being spanned by the shaft axis (3) and the mass centre of gravity (4) of the unbalance portion (2).

## Revendications

1. Arbre d'équilibrage (1) pour équilibrer des forces de masse et/ou des couples de masse d'un moteur à combustion interne, comprenant au moins une section à balourd (2) avec un centre de masse (4) s'étendant de manière excentrique par rapport à l'axe de l'arbre (3) et au moins un tourillon de palier (5, 6) en vue du support sur palier radial de l'arbre d'équilibrage (1) dans le moteur à combustion interne, la section à balourd (2) et le tourillon de palier (5, 6) étant fabriqués séparément en matériaux différents et étant ensuite assemblés axialement l'un à l'autre au moyen d'une connexion rigide en rotation à goupille et alésage, **caractérisé en ce que** la connexion à goupille et alésage est réalisée en agissant par engagement par coopération de formes dans le sens de rotation de l'arbre d'équilibrage (1) et présente au moins deux goupilles (8, 9, 10, 11) et des alésages associés (12, 13, 14, 15, 16, 17, 18, 19) qui s'étendent de manière excentrique par rapport à l'axe de l'arbre (3).

2. Arbre d'équilibrage (1) selon la revendication 1, **caractérisé en ce que** le matériau du tourillon de palier (5, 6) est un acier pour paliers à roulement, le tourillon de palier (5, 6) servant de piste de roulement intérieure pour les corps de roulement d'un palier à roulement.

3. Arbre d'équilibrage (1) selon la revendication 2, **caractérisé en ce que** le tourillon de palier (5, 6) présente une largeur variable sur sa périphérie dans la direction de l'axe de l'arbre (3), de telle sorte que le tourillon de palier (5, 6), dans une zone de charge dans laquelle le tourillon de palier (5, 6) est sollicité par la charge radiale de la section à balourd (2) tournant avec l'arbre d'équilibrage (1), présente une première largeur (28) et, à l'extérieur de la zone de charge, soit nettement aminci en présentant une deuxième largeur (29) ou soit interrompu au niveau de la périphérie, les goupilles (8, 9, 10, 11) et les alésages associés (12, 13, 14, 15, 16, 17, 18, 19) étant excentrés par rapport à la zone de charge.

4. Arbre d'équilibrage (1) selon la revendication 3, **caractérisé en ce que** les goupilles (8, 9, 10, 11) et les alésages associés (12, 13, 14, 15, 16, 17, 18, 19) s'étendent complètement à l'intérieur de la première largeur (28) du tourillon de palier (5, 6).

5. Arbre d'équilibrage (1) selon la revendication 1, **caractérisé en ce que** deux tourillons de palier (5, 6) réalisées de manière identique sont prévus, lesquels sont assemblés aux deux extrémités longitudinales de la section à balourd (2), le tourillon de palier (5) assemblé à une extrémité longitudinale du côté de l'entraînement de la section à balourd (2) et un élément d'entraînement (7) de l'arbre d'équilibrage (1) réalisé séparément de celui-ci étant ensuite assemblés axialement l'un à l'autre au moyen d'une connexion supplémentaire rigide en rotation à goupille et alésage et la connexion supplémentaire à goupille et alésage étant également réalisée en agissant par engagement par coopération de formes dans le sens de rotation de l'arbre d'équilibrage (1) et présentant au moins deux goupilles (20, 21) et des alésages associés (12, 14, 22, 23) qui s'étendent de manière excentrique par rapport à l'axe de l'arbre (3).

6. Arbre d'équilibrage (1) selon la revendication 5, **caractérisé en ce que** les connexions à goupille et alésage et la connexion supplémentaire à goupille et alésage présentent à chaque fois exactement deux goupilles réalisées de manière identique (8 et 9, 10 et 11, 20 et 21) et des alésages associés (12, 13, 14, 15, 16, 17, 18, 19, 22, 23) qui s'étendent par rapport à un plan de symétrie longitudinale (26) de l'arbre d'équilibrage (1) formé par l'axe de l'arbre (3) et le centre de masse (4) de la section à balourd (2) de manière essentiellement symétrique spéculaire.
